(19) Europäisches Patentamt / European Patent Office / Office européen des brevets

(11) **EP 2 411 123 B1**

(12) **EUROPÄISCHE PATENTSCHRIFT**

(45) Veröffentlichungstag und Bekanntmachung des Hinweises auf die Patenterteilung:
**24.04.2013   Patentblatt 2013/17**

(21) Anmeldenummer: 10725012.8

(22) Anmeldetag: **14.05.2010**

(51) Int Cl.:
*B01D 53/50* (2006.01)     *B01D 53/75* (2006.01)
*B01D 53/78* (2006.01)     *B01D 53/83* (2006.01)
*B01D 53/96* (2006.01)     *C01D 7/00* (2006.01)
*C01F 11/46* (2006.01)     *F23J 15/04* (2006.01)

(86) Internationale Anmeldenummer:
**PCT/EP2010/002983**

(87) Internationale Veröffentlichungsnummer:
**WO 2010/142369 (16.12.2010 Gazette 2010/50)**

(54) **VERFAHREN ZUR BEHANDLUNG VON SCHWEFELOXIDE ENTHALTENDEN ABGASEN**

METHOD FOR TREATING EXHAUST GASES COMPRISING SULFUR OXIDES

PROCÉDÉ DE TRAITEMENT D'EFFLUENTS GAZEUX CONTENANT DES OXYDES DE SOUFRE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **12.06.2009   DE 102009025171**
**15.06.2009   DE 102009025312**
**25.06.2009   DE 102009030628**
**26.06.2009   DE 102009030902**

(43) Veröffentlichungstag der Anmeldung:
**01.02.2012   Patentblatt 2012/05**

(73) Patentinhaber: **DrySo Tec GmbH**
**45356 Essen (DE)**

(72) Erfinder:
• **MORUN, Bernd**
**45259 Essen (DE)**
• **SCHMIDT, Paul-Udo**
**45721 Haltern am See (DE)**

(74) Vertreter: **Von Rohr**
**Patentanwälte Partnerschaft**
**Rüttenscheider Straße 62**
**45130 Essen (DE)**

(56) Entgegenhaltungen:
**EP-A1- 0 005 301     EP-A1- 0 366 182**

**Beschreibung**

Die vorliegende Erfindung betrifft das technische Gebiet der Behandlung von Schwefeloxide enthaltenden Abgasen, insbesondere Abgasen aus technischen Verbrennungsanlagen, den sogenannten Rauchgasen, oder Abgasen aus technischen Prozessen, wie z. B. der Stahlherstellung (z. B. Gichtgase etc.).

Insbesondere betrifft die vorliegende Erfindung ein Verfahren zur Behandlung von Schwefeloxide enthaltenden Abgasen, insbesondere aus technischen Verbrennungsanlagen, wie Rauchgasen, oder aus technischen Prozessen, zu Zwecken der Entfernung und/oder Abscheidung der Schwefeloxide bzw. zu Zwecken der Reduktion des Schwefeloxidgehalts sowie eine Vorrichtung zur Durchführung des Verfahrens.

Unter Rauchgasen versteht man im allgemeinen Abgase aus ortsfesten, großtechnischen Verbrennungsanlagen, wie z. B. Gas- und Kohlekraftwerke oder Müllverbrennungsanlagen. Diese Abgase enthalten umwelt- und gesundheitsgefährdende Stoffe und müssen daher - nicht zuletzt zur Einhaltung der gesetzlichen Bestimmungen - gereinigt werden.

Bei den gasförmigen bzw. leichtflüchtigen Stoffen mit einem nicht unerheblichen Gefährdungspotential für Mensch und Umwelt, welche üblicherweise bei Verbrennungsprozessen entstehen, handelt es sich vornehmlich um Oxide des Kohlenstoffs, des Stickstoffs und des Schwefels sowie um Hydrogenchlorid. Bei den Kohlenstoffoxiden handelt es sich um das als Treibhausgas bekannte Kohlendioxid sowie um das hochgiftige Kohlenmonoxid, welches in seiner Toxizität in etwa der Blausäure entspricht. Die Stickoxide, Schwefeloxide und das Hydrogenchlorid sind teilweise ebenfalls giftig und bilden allesamt bei Kontakt mit Wasser Säuren, welche als sogenannter saurer Regen zu einer Übersäuerung des Bodens führen. Die Stickoxide werden darüber hinaus in der Atmosphäre zu Nitraten umgesetzt und führen so zu einer Überdüngung bzw. Eutrophierung der Gewässer. Weitere Bestandteile der Rauchgase sind Feinstaub, Ruß und Flugasche, welche krebserregend und mit Sehwezmetallen belastet sein können sowie eine Rolle bei der Entstehung von Smog spielen. Weiterhin entstehen bei Verbrennungsprozessen oftmals auch organische Verbindungen wie z. B. hochtoxische Dioxine oder VOCs (Volatile Organic Compounds, d. h. leichtflüchtige organische Verbindungen), welche für die Bildung von bodennahem Ozon mitverantworilich sind.

Im Stand der Technik sind Verfahren bekannt, mit denen die zuvor genannten Stoffe, mit Ausnahme des Kohlendioxids, aus den Rauchgasen entfernt werden können bzw, mit denen ihr Anteil deutlich verringert wird.

So wird zum Beispiel der Anteil des Kohlenmonoxids in den Rauchgasen durch eine gezielte Steuerung der Verbrennung gering gehalten. Weiterhin kann entstandenes Kohlenmonoxid in den Brennraum zurückgeführt oder in einer nachfolgenden Brennerstufe zu Kohlendioxid umgesetzt werden.

Ganz ähnlich wird der Anteil der Stickoxide in den Rauchgasen durch gezielte Steuerung der Bedingungen, unter welchen die Verbrennung stattfindet, gering gehalten. Alternativ kann jedoch auch eine Reduktion der Stickoxide mit stickstoffhaltigen Verbindungen, wie z. B. Ammoniak oder Harnstoff, zu elementarem Stickstoff durch Einsprühen bzw. Eindüsen der stickstoffhaltigen Substanzen in den Brennraum bei ca. 900 °C oder durch eine nachgeschaltete, katalytisch aktivierte Reaktion erfolgen.

Feinstaub, Ruß und Flugasche können durch Filtersystem, wie z.B. Schlauchfilter oder Elektrofilter, aus den Rauchgasen abgeschieden werden, während flüchtige organische Verbindungen (VOCs) durch Absorption an Aktivkohle oder durch Kondensation entfernt werden können.

Zur Abscheidung der Schwefeloxide aus den Rauchgasen ist im Stand der Technik eine Vielzahl von Verfahren bekannt. Es wird prinzipiell unterschieden zwischen regenerativen und nichtregenerativen Verfahren. Ein regeneratives Verfahren zur Rauchgasentschwefelung ist zum Beispiel das Wellmann-Lord-Verfahren, welches das Schwefeldioxid aus dem Rauchgas mit einer Natriumsulfitlösung zu Natriumhydrogensulfid umsetzt. Durch späteres Erwärmen des Natriumhydrogensulfids wird das Schwefeldioxid wieder frei und das Natriumsulfit kann anschließend zur erneuten Aufnahme von Schwefeldioxid genutzt werden. Insgesamt ist jedoch die Bedeutung der regenerativen Verfahren im Vergleich zu den nichtregenerativen Verfahren äußerst gering.

Die nichtregenerativen Verfahren zielen alle darauf ab, Schwefeloxide durch chemische Umsetzung als Sulfate zu binden. Dies geschieht in der Kalkwäsche in Form von Gips ($CaSO_4 \cdot 2\ H_2O$), in der Trockensorption in Form von Natriumsulfat und im Ammoniak-REA-Verfahren (Walther-Verfahren) in Form von Ammoniumsulfat.

Die Verfahren des Standes der Technik zur Abscheidung bzw. Entfernung von Schwefeloxiden aus Rauchgasen besitzen allesamt gravierende Nachteile. Die Trockensorption, in deren Verlauf die Schwefeloxide mit Natriumhydrogencarbonat umgesetzt werden ist hocheffektiv, jedoch aufgrund des relativ kostenintensiven Natriumhydrogencarbonats nicht kostengünstig durchzuführen. Diese Kosten verteuern den Prozeß, in dem die schwefelhaltigen Rauchgase angefallen sind, und somit letztendlich auch die hergestellten Produkte.

Die Kalkwäsche, die mit einer Lösung bzw. Dispersion von Calciumhydroxid arbeitet, ist deutlich kostengünstiger durchzuführen, allerdings bei weitem nicht so effektiv wie die Trockensorption. Hierdurch werden große Mengen an Substanz benötigt, die den Prozeß wiederum aufwendiger und kostenintensiver machen. Auch fallen Abwässer an, die ebenfalls gereinigt bzw. entsorgt werden müssen.

Das Ammoniak-REA-Verfahren besitzt keine große technische Bedeutung, da es die Nachteile der beiden zuvor genannten Verfahren vereinigt. Allerdings kann das gewonnene Ammoniumsulfat als Düngemittel eingesetzt werden.

Auch Abgase aus technischen Prozessen, wie z. B. der Stahlherstellung (z. B. Abgase aus der chemischen Röstung bzw. Sinterbandbehandlung, Gichtgase aus dem Hochofenprozeß etc.), können signifikante Mengen an Schwefeloxiden enthalten. Bislang sind in diesem Zusammenhang aber keine effizienten Verfahren zur Abscheidung der Schwefeloxide aus den betreffenden Abgasen dieser technischen Prozesse bekannt. Oftmals werden die Schadstoffe nach Überführung in die Salzform dem Abwasser beigemischt oder anderweitig entsorgt, so daß hieraus keine neuen Rohstoffe bzw. Produkte generiert werden, was ökonomisch wie ökologisch nachteilig ist.

Die Druckschrift EP 0 366 182 A1 betrifft ein Verfahren zur Entsorgung von Natriumsulfat enthaltenden industriellen Rückständen, wobei das Natriumsulfat des Rückstandes mit einem Calciumsalz versetzt wird. Das dabei ausfallende Calciumsulfat wird in einen Steinsalzstock eingeleitet und dort gelagert. Im Gegenzug wird eine wässrige Steinsalzlösung bzw. Natriumchloridlösung aus dem Steinsalzstock gefördert.

Weiterhin betrifft die Druckschrift EP 0 005 301 A1 ein Verfahren zum Entfernen von Schwefeloxiden aus Verbrezmungsabgas, wobei das Abgas durch eine Reaktionszone strömt, die nach der Art eines Sprühtrockners arbeitet. In die Reaktionszone wird eine Reinigungsflüssigkeit eingesprüht, die aus einer wässrigen Lösung von Soda und/oder Natriumbicarbonat besteht. In der Reaktionszone wird der Wassergehalt der Reinigungsflüssigkeit durch den Wärmeinhalt des Abgases praktisch vollständig verdampft und das Abgas anschließend durch einen Filter geleitet. Aus der Reaktionszone und dem Filter werden wasserfreie Feststoffprodukte abgezogen, die zumindest 75 Gewichtsprozent aus Natriumsulfit, Natriumsulfat und Natriumchlorid bestehen. Diese Feststoffe werden wieder zu Soda aufgearbeitet. Zu diesem Zweck werden die Feststoffprodukte gelöst, Sulfit zu Sulfat oxidiert, so dass eine Natriumsulfat und Natriumchlorid enthaltene Lösung entsteht.

Der vorliegenden Erfindung liegt nunmehr die Aufgabe zugrunde, ein Verfahren zur Entschwefelung von Rauchgasen oder anderen schwefeloxidhaltigen Abgasen bzw. ein Verfahren zur Behandlung von Schwefeloxide enthaltenden Abgasen, insbesondere Abgasen aus technischen Verbrennungsanlagen oder Abgasen aus technischen Prozessen (wie z. B. der Stahlherstellung), zu Zwecken der Entfernung und/oder Abscheidung der Schwefeloxide oder zu Zwecken der Reduktion des Schwefeloxidgehalts zur Verfügung zu stellen, welches die zuvor geschilderten Nachteile der Verfahren des Standes der Technik zumindest weitgehend vermeidet oder aber wenigstens abschwächt.

Zur Lösung der zuvor geschilderten Aufgabe schlägt die vorliegende Erfindung gemäß einem ersten Erfindungsaspekt ein Verfahren nach Patentanspruch 1 vor; weitere vorteilhafte Ausgestaltungen sind Gegenstand der diesbezüglichen abhängigen Patentansprüche.

Weiterer Gegenstand der vorliegenden Erfindung ist gemäß einem zweiten Erfindungsaspekt eine Vorrichtung zur Durchführung des erfindungsgemäßen Verfahrens nach Patentanspruch 12; weitere vorteilhafte Ausgestaltungen sind Gegenstand des diesbezüglichen abhängigen Patentanspruchs.

Es versteht sich von selbst, daß besondere Ausgestaltungen und Ausführungsformen, welche nur im Zusammenhang mit einem Erfindungsaspekt beschrieben sind, auch in bezug auf die anderen Erfindungsaspekte entsprechend gelten, ohne daß dies ausdrücklich beschrieben ist solange sie unter die Ansprüche Fallen.

Im übrigen gilt, daß der Fachmann anwendungsbezogen oder einzelfallbedingt von den nachfolgend aufgeführten Zahlen-, Wert- bzw. Bereichsangaben abweichen kann, ohne daß er den Rahmen der vorliegenden Erfindung verläßt solange dies unter den Wortlaut der Ansprüche fällt.

Gegenstand der vorliegenden Erfindung ist somit - gemäß einem **ersten** Aspekt der vorliegenden Erfindung - ein Verfahren zur Behandlung von Schwefeloxide enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide oder zu Zwecken der Reduktion des Schwefeloxidgehalts, wobei das Verfahren die folgenden Verfahrensschritte umfaßt:

(a) Umsetzung der aus den zu behandelnden Abgasen stammenden Schwefeloxide mit Natriumhydrogencarbonat unter oxidierenden Bedingungen und/oder in Gegenwart von Sauerstoff zur Erzeugung von Natriumsulfat, wobei pulverförmiges Natriumhydrogencarbonat in feiner Verteilung bei Temperaturen im Bereich von 100 bis 300 °C in den Strom der die Schwefeloxide enthaltenden Abgase eingedüst und/oder eingesprüht wird; dann

(b) Umsetzung des in Verfahrensschritt (a) erhaltenen Natriumsulfats mit Calciumchlorid zur Erzeugung von Calciumsulfat und Natriumchlorid, wobei das in Verfahrensschritt (a) erhaltene feste Natriumsulfat in eine wäßrige Lösung oder Dispersion überführt wird, welche dann mit einer wäßrigen Lösung oder Dispersion von Calciumchlorid in Kontakt gebracht wird, und das in Verfahrensschritt (b) erhaltene Calciumsulfat abgetrennt und aus dem Verfahren ausgeschleust wird; nachfolgend

(c) Umsetzung des in Verfahrensschritt (b) erhaltenen Natriumchlorids in Form einer wäßrigen Lösung oder Dispersion zu Natriumhydrogencarbonat unter Zusatz von und/oder Inkontaktbringen mit gasförmigem Kohlendioxid und Ammoniak unter Bildung von Ammoniumchlorid als weiterem Reaktionsprodukt, gefolgt von einer Rückführung des resultierenden Natriumhydrogencarbonats in Verfahrensschritt (a); dann

(d) Umsetzung des in Verfahrensschritt (c) erhaltenen Ammoniumchlorids zu Ammoniak und Calciumchlorid, gefolgt von einer Rückführung des resultierenden Ammoniaks in Verfahrensschritt (c) und einer Rückführung des resultierenden Calciumchlorids in Verfahrensschritt (b), wobei eine wäßrige Lösung oder Dispersion des Ammoniumchlorids unter Zusatz von und/oder Inkontaktbringen mit Calciumhydroxid umgesetzt wird.

Unter dem Begriff "Alkali" sollen im Rahmen der vorliegenden Erfindung die Elemente der ersten Hauptgruppe des Periodensystems der Elemente, synonym auch als Alkalimetalle bezeichnet, bestehend aus den Elementen Lithium (Li), Natrium (Na), Kalium (K), Rubidium (Rb) und Caesium (Cs) bzw. ihre Kationen, verstanden werden.

Die Verfahrensschritte (a), (b), (c) und (d) des erfindungsgemäßen Verfahrens werden nachfolgend durch die Reaktionen (1), (2), (3) und (4) dargestellt und erläutert.

In Verfahrensschritt (a) findet die in Reaktion (1) beschriebene Umsetzung von Natriumhydrogencarbonat ($NaHCO_3$) mit Schwefeldioxid ($SO_2$) in Gegenwart von Sauerstoff ($O_2$) zu Natriumsulfat ($Na_2SO_4$), Kohlendioxid ($CO_2$) und Wasser ($H_2O$) statt:

$$2\ NaHCO_3 + SO_2 + \frac{1}{2}\ O_2 \rightarrow Na_2SO_4 + 2\ CO_2 + H_2O \qquad (1)$$

Weiterhin findet in Verfahrensschritt (b) die in Reaktion (2) dargestellte Umsetzung von Natriumsulfat mit Calciumchlorid ($CaCl_2$) in Gegenwart von Wasser zu Calciumsulfat-Dihydrat (Gips, $CaSO_4$ - 2 $H_2O$) und Natriumchlorid, (NaCl) statt:

$$Na_2SO_4 + CaCl_2 + 2\ H_2O \rightarrow CaSO_4 \cdot 2\ H_2O + 2\ NaCl \qquad (2)$$

Die einzelnen Verfahrensschritte des erfindungsgemäßen Verfahrens werden im allgemeinen bei Atmosphärendruck, d. h. bei Drücken von etwa 1 bar durchgeführt, wobei eine Verfahrensführung grundsätzlich auch bei reduzierten oder erhöhten Drücken möglich ist.

Im Rahmen der vorliegenden Erfindung wird als Alkalihydrogencarbonat Natriumhydrogencarbonat eingesetzt und/oder in Verfahrensschritt (a) als Alkalisulfat Natriumsulfat erhalten und in Verfahrensschritt (b) als Alkalihalogenid Natriumchlorid erhalten.

Die Durchführung des erfindungsgemäßen Verfahrens mit natriumhaltigen Alkaliverbindungen ist insbesondere im Hinblick auf die Reaktivitäten und Löslichkeiten der Alkaliverbindungen sowie der entstehenden Kosten in der Anschaffung bzw. hinsichtlich der Prozeßführung bevorzugt.

Erfindungsgemäß wird Verfahrensschritt (a) in fester Phase durchgeführt. Insbesondere wird Verfahrensschritt (a) derart durchgeführt, daß die die Schwefeloxide enthaltenden Abgase unter oxidierenden Bedingungen und/oder in Gegenwart von Sauerstoff mit festem Natriumhydrogencarbonat in Kontakt gebracht werden, insbesondere wobei das pulverförmige Natriumhydrogencarbonat in feiner Verteilung mit den Schwefeloxiden in Kontakt gebracht wird, insbesondere in den Strom der die Schwefeloxide enthaltenden Abgabe eingedüst und/oder eingesprüht wird. Die Durchführung des Verfahrensschritts (a) in fester Phase führt zu einem besonders hohen Grad der Abscheidung von Schwefeloxiden, und das entstehende Alkalisulfat kann auf einfache Weise gesammelt und weiter verarbeitet werden, ohne daß Abwässer, welche aufwendig gereinigt werden müssen, entstehen.

Weiterhin wird Verfahrensschritt (a) erfindungsgemäß in fester Phase durchgeführt und/oder wird Verfahrensschritt (a) derart durchgerührt, daß die die Schwefeloxide enthaltenden Abgase unter oxidierenden Bedingungen und/oder in Gegenwart von Sauerstoff mit festem Natriumhydrogencarbonat in Kontakt gebracht werden, wobei die Schwefeloxide enthaltenden Abgase im noch heißen Zustand mit dem pulverförmigen Natriumhydrogencarbonat in Kontakt gebracht werden.

Was die Temperatur der Schwefeloxide enthaltenden Abgase im noch heißen Zustand aubelangt, so kann diese im Rahmen der vorliegenden Erfindung in weiten Bereichen variieren. Erfindungsgemäß liegt die Temperatur der die Schwefeloxide enthaltenden Abgase im Bereich von 100 °C bis 300 °C. In diesem Temperaturbereich ist eine optimale Umsetzung der Schwefeloxide mit dem pulverförmigen Natriumhydrogencarbonat gegeben, wobei insbesondere bei Verwerdung von Natriumhydrogencarbonat dieses bei Kontakt mit den Abgasen im heißen Zustand zu feinst verteiltem Alkalicarbonat reagieren kann. Durch die Entstehung feinster Partikel mit großen spezifischen Oberflächen wird eine nahezu vollständige Umsetzung des eingesetzten Natriumhydrogencarbonats mit den Schwefeloxiden erreicht. Anwendungsbezogen oder einzelfallbedingt ist es jedoch nicht ausgeschlossen, von den vorgenannten Temperaturwerten abzuweichen, ohne daß der Rahmen der vorliegenden Erfindung verlassen ist; dies zu entscheiden liegt im fachmännischen Können bzw. im Ermessen des auf diesem Gebiet tätigen Fachmanns.

Weiterhin ist es erfindungsgemäß besonders vorteilhaft, wenn in Verfahrensschritt (b) das Natriumsulfat in Form einer wäßrigen Lösung oder Dispersion mit einer wäßrigen Lösung oder Dispersion des Calciumchlorids in Kontakt gebracht wird. Zudem ist es vorgesehen, daß das in Verfahrensschritt (a) erhaltene, insbesondere feste Natriumsulfat in eine wäßrige Lösung oder Dispersion gebracht und/oder überführt wird, welche dann mit einer wäßrigen Lösung oder Dispersion des Calciumchlorids in Kontakt gebracht wird. Durch Lösen bzw. Dispergieren des Natriumsulfats, vorzugsweise in Wasser, können die bei der Schwefeloxidabscheidung mitgerissenen festen Verbrennungsrückstände, insbesondere in Form von Feinstaub, Ruß und Flugasche, wieder von dem Alkalisulfat getrennt werden, z. B. durch Flotation.

Erfindungsgemäß wird das in Verfahrensschritt (b) erhaltene Calciumsulfat abgetrennt und/oder aus dem Verfahren ausgeschleust. Sofern Verfahrensschritt (b) im wäßrigen Medium durchgeführt wird, so fällt das entstehende Calciumsulfat in Form von Gips an. Der bei der Rauchgasentschwefelung erhaltene Gips ist hochrein und auch unter dem Namen REA-Gips (<u>R</u>auchgas-<u>E</u>ntschwefelungs-<u>A</u>nlagen-Gips) bekannt und findet vielfältige Anwendung wie im Bereich der Bauindustrie, wobei hier insbesondere Verkleidungsplatten aus Gips, die sogenannten REA-Gipsplatten, erwähnt werden können.

Was den Temperaturbereich anbelangt, in welchem Verfahrensschritt (b) durchgeführt wird, so kann dieser auch in weiten Bereichen variieren. Im allgemeinen liegt die Temperatur bei der Durchführung des Verfahrensschritts (b) im Bereich von 10 °C bis 90 °C, insbesondere 15 °C bis 60 °C, bevorzugt 20 °C bis 40 °C. In diesem Temperaturbereich ist die Ausbeute der Umsetzung optimal bzw. läßt sich das erhaltene Calciumsulfat ohne weiteres abtrennen. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden liegt im fachmännischen Können bzw. im Ermessen des auf diesem Gebiet tätigen Fachmanns.

Weiterhin wird erfindungsgemäß das in Verfahrensschritt (b) erhaltene Natriumchlorid in einem nachfolgenden Verfahrensschritt (c) zu Natriumhydrogencarbonat umgesetzt.

Hierbei ist es vorgesehen, daß das Natriumchlorid unter Zusatz von bzw. Inkontaktbringen mit Kohlendioxid und Ammoniak zu Natriumhydrogencarbonat umgesetzt wird.

In diesem Zusammenhang wird in Verfahrensschritt (c) das Natriumchlorid in Form einer wäßrigen Lösung oder Dispersion eingesetzt. Gleichermaßen ist es erfindungsgemäß vorgesehen, daß das Kohlendioxid und der Ammoniak in gasförmiger Form eingesetzt werden.

In Verfahrensschritt (c) findet die in der Reaktion (3) dargestellte Umsetzung von Natriumchlorid mit Kohlendioxid ($CO_2$) und Ammoniak ($NH_3$) im wäßrigen Milieu zu Ammoniumhydrogencarbonat ($NaHCO_3$) und Ammoniumchlorid ($NH_4Cl$) statt:

$$NaCl + CO_2 + NH_3 + H_2O \rightarrow NaHCO_3 + NH_4Cl \qquad (3)$$

Erfindungsgemäß wird das in Verfahrensschritt (c) Natriumhydrogencarbonat in Verfahrensschritt (a) zurückgeführt, insbesondere nach Abtrennung, vorzugsweise Ausfällung, aus dem am Ende von Verfahrensschritt (c) resultierenden Reaktionsgemisch.

Gemäß einer bevorzugten Ausführungsform stammt das in Verfahrensschritt (c) eingesetzte Kohlendioxid aus den zu behandelnden Abgasen, insbesondere nach Aufkonzentrierung des Kohlendioxidgehalts in den zu behandelnden Abgasen, bevorzugt auf mindestens 50 Vol.-%, insbesondere mindestens 80 Vol.-%, bezogen auf die Abgase. Wenn das zur Bildung des Natriumhydrogencarbonats benötigte Kohlendioxid aus den Abgasen stammt, ist es nicht erforderlich, dieses zusätzlich zu erwerben, was Kosten spart. Zudem läßt sich so die Kohlendioxidbilanz des erfindungsgemäßen Verfahrens in bezug auf die chemischen Reaktionen neutral gestalten, d. h. es wird im Zuge der ablaufenden Reaktion ebensoviel Kohlendioxid freigesetzt, wie bei der Bildung des Natriumhydrogencarbonats gebunden wird.

Alternativ kann das zur Herstellung des Natriumhydrogencarbonats benötigte Kohlendioxid jedoch auch aus einer externen Quelle eingespeist werden. In diesem Fall kann das Kohlendioxid beispielsweise aus Luftzerlegungs- bzw. Luftverflüssigungsprozessen stammen. Dabei kann das Kohlendioxid in Konzentrationen von über 90 Vol.%, bezogen auf das verwendete Gasvolumen, eingesetzt werden.

Was die Temperaturen anbelangt, bei denen Verfahrensschritt (c) des erfindungsgemäßen Verfahrens durchgeführt wird, so können diese in weiten Bereichen variieren. Im allgemeinen kann Verfahrensschritt (c) bei Temperaturen von höchstens 60 °C durchgeführt werden. Insbesondere kann Verfahrensschritt (c) bei Temperaturen im Bereich von 10 bis 60 °C, insbesondere 20 bis 60 °C, durchgeführt werden. Dieser Temperaturbereich ist insbesondere vorteilhaft, wenn in Verfahrensschritt (c) Natriumhydrogencarbonat gebildet wird. Alkalihydrogencarbonate, insbesondere Natriumhydrogencarbonat, reagieren bei höheren Temperaturen zu den entsprechenden Alkalicarbonaten. Dennoch ist es anwendungsbezogen oder einzelfallbedingt nicht ausgeschlossen, von den vorgenannten Werten abzuweichen.

In bezug auf das erfindungsgemäße Verfahren wird in Verfahrensschritt (c) als weiteres Reaktionsprodukt Ammoniumchlorid gebildet. Dabei ist es vorgesehen, daß das in Verfahrensschritt (c) als weiteres Reaktionsprodukt gebildete Ammoniumchlorid in Form einer wäßrigen Lösung oder Dispersion vorliegt. Erfindungsgemäß wird das Ammomiumchlorid insbesondere dessen wäßrige Lösung oder Dispersion, in einem nachfolgenden Verfahrensschritt (d) zu Ammoniak und Calciumchlorid umgesetzt. Dabei ist es vorgesehen, daß das Ammomiumchlorid insbesondere dessen wäßrige Lösung oder Dispersion, unter Zusatz von bzw. Inkontaktbringen mit Calciumhydroxid zu Ammoniak und Calciumchlorid umgesetzt wird.

Weiterhin ist es erfindungsgemäß vorgesehen, daß der in Verfahrensschritt (d) erhaltene Ammoniak in Verfahrensschritt (c) zurückgeführt wird. Darüber hinaus ist es ebenfalls vorgesehen, daß das im Verfahrensschritt (d) erhaltene Calciumchlorid in den Verfahrensschritt (b) zurückgeführt wird.

Der Verfahrensschritt (d) wird nachfolgend durch die Reaktion (4) veranschaulicht, in welchem die Umsetzung von Ammomiumchlorid ($NH_4Cl$) mit Calciumhydroxid ($Ca(OH)_2$) zu Calciumchlorid ($CaCl_2$), Ammoniak ($NH_3$) und Wasser erfolgt:

$$2\ NH_4Cl + Ca(OH)_2 \rightarrow CaCl_2 + 2\ NH_3 + 2\ H_2O \qquad (4)$$

Die Temperaturen, bei denen der optionale Verfahrensschritt (d) des erfindungsgemäßen Verfahrens durchgeführt wird, können im Rahmen der vorliegenden Erfindung in weiten Bereichen variieren. Im allgemeinen kann Verfahrensschritt (d) bei Temperaturen von 20 bis 100 °C, insbesondere 50 bis 95°C, bevorzugt 80 bis 90 °C durchgeführt werden. In diesem Temperaturbereich läßt sich der Ammoniak besonders effektiv aus dem vorzugsweise wäßrigen Medium entfernen. Dennoch ist es anwendungsbezogen oder einzelfallbedingt nicht ausgeschlossen, von den vorgenannten Werten abzuweichen

Es hat sich im Rahmen der vorliegenden Erfindung als besonders vorteilhaft erwiesen, wenn die zur Durchführung des Verfahrensschritts (d) benötigen Temperaturen durch die stark exotherme Hydratation von gebranntem Kalk (Calciumoxid, CaO) zu gelöschtem Kalk bzw. Kalkmilch (Calciumhydroxid, $Ca(OH)_2$) erzeugt werden. Auf diese Weise wird eine kostenintensive externe Beheizung vermieden.

Erfindungsgemäß können die zu behandelnden Abgase als Schwefeloxide Schwefeldioxid und/oder Schwefeltrioxid enthalten.

Es ist jedoch auch möglich, daß die zu behandelnden Abgase neben Schwefeloxiden auch andere saure Gase, insbesondere Halogenwasserstoffe, wie Chlorwasserstoff, entfalten. Dabei kann es vorgesehen sein, daß die sauren Gase, insbesondere der Halogenwasserstoff, vorzugsweise Chlorwasserstoff in Verfahrensschritt (a) des erfindungsgemäßen Verfahrens mit dem Natriumhydrogencarbonat umgesetzt werden.

Erfindungsgemäß können die sauren Gase, insbesondere der Halogenwasserstoff, vorzugsweise Chlorwasserstoff, zu Natriumchlorid umgesetzt werden. Dabei kann es vorgesehen sein, daß das Natriumchlorid in Verfahrensschritt (c) eingesetzt wird. Dabei kann es auch vorgesehen sein, daß das Natriumchlorid nach Durchlaufen von Verfahrensschritt (b) in Verfahrensschritt (c) eingesetzt wird.

Das Natriumchlorid wird gemäß dieser Ausführungsform in Verfahrensschritt (a) gleichzeitig mit dem bei der Abscheidung von Schwefeloxiden anfallenden Natriumsulfaten gebildet und mit diesen zusammen gesammelt und weiter verarbeitet. Das Natriumchlorid kann dabei wie das Natriumsulfat gelöst bzw. dispergiert und von festen Verbrennungsrückständen gereinigt werden. Bei der anschließenden Umsetzung mit Calciumchlorid in Verfahrensschritt (b) reagiert zumindest im wesentlichen nur das Natriumsulfat, wobei es insbesondere zu Natriumchlorid umgesetzt wird. Das aus Verfahrensschritt (a) stammende Natriumchlorid geht dabei unverändert aus Verfahrensschritt (b) hervor und wird erst in Verfahrensschritt (c) zusammen mit dem in Verfahrensschritt (b) aus dem Natriumsulfat hervorgegangenen Natriumchlorid umgesetzt.

Im allgemeinen entstehen insbesondere bei der Umsetzung der sauren Gase, insbesondere des Halogenwasserstoffs, vorzugsweise Chlorwasserstoffs, in Verfahrensschritt (a) mit Natriumhydrogencarbonat Kohlendioxid und Wasser als weitere Reaktionsprodukte.

Die Umsetzung der sauren Gase mit Natriumhydrogencarbonat im Verfahrensschritt (a) wird nachfolgend in der Reaktion (5) durch Umsetzung von Natriumhydrogencarbonat ($NaHCO_3$) mit Chlorwasserstoff (HCl) zu Natriumchlorid (NaCl), Kohlendioxid ($CO_2$) und Wasser veranschaulicht:

$$NaHCO_3 + HCl \rightarrow NaCl + CO_2 + H_2O \qquad (5)$$

Nach einer besonderen Ausführungsform der vorliegenden Erfindung wird das erfindungsgemäße Verfahren mit einem Entstickungsverfahren zu Zwecken der Entfernung und/oder Abscheidung der in den zu behandelnden Abgasen gleichermaßen vorhandenen Stickoxide oder zu Zwecken der Reduktion des Stickoxidgehalts gekoppelt und/oder kombiniert.

Dabei kann es vorgesehen sein, daß das Entstickungsverfahren stromaufwärts oder stromabwärts zu dem erfindungsgemäßen Verfahren durchgeführt wird. Stromaufwärts durchgeführte Entstickungsverfahren werden im allgemeinen unter nichtkatalytischen Bedingungen bei hohen Temperaturen durchgeführt; insbesondere wird der Stickoxidgehalt durch Wahl geeigneter Verbrennungsbedingungen minimiert. Zudem können die Stickoxide durch Eindüsen von z. B. Ammoniak oder Harnstoff direkt in den Verbrennungsraum in einer Komproportionierung zu elementaren Stickstoff umgesetzt werden. Stromabwärts geschaltete Entstickungsverfahren gehen ebenfalls von einer Reduktion der Stickoxide durch Komproportionierung mit Ammoniak oder Harnstoff aus; aufgrund der wesentlich geringeren Temperaturen verlaufen diese Reaktionen jedoch vorrangig unter katalytischer Aktivierung.

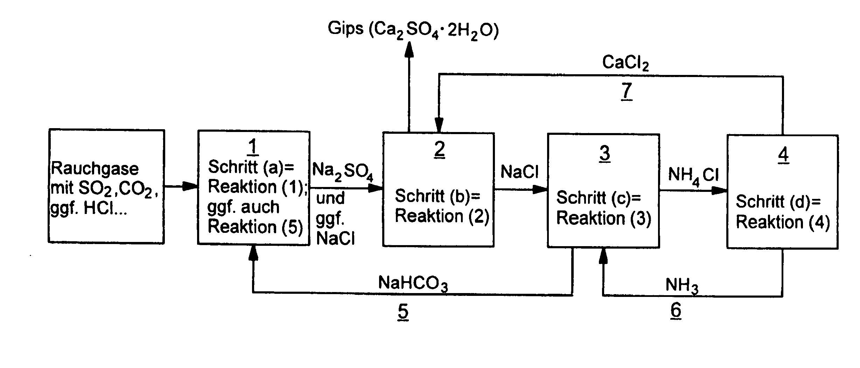

Die einzige Figurendarstellung zeigt schematisch - neben der schematischen Darstellung der nachfolgend beschriebenen erfindungsgemäßen Vorrichtung - einen schematisierten Ablauf des erfindungsgemäßen Verfahrens, wie er zuvor beschrieben wurde. Die Einzelheiten wurden bereits ausführlich dargelegt, so daß hier auf die diesbezüglichen Ausführungen verwiesen werden kann.

Weiterer Gegenstand der vorliegenden Erfindung - gemäß einem **zweiten** Aspekt der vorliegenden Erfindung - ist eine Vorrichtung nach Anspruch 12, wobei weitere, insbesondere vorteilhafte Ausgestaltungen Gegenstand des diesbezüglichen abhängigen Anspruchs sind.

Die erfindungsgemäße Vorrichtung ist, wie zuvor angeführt, in der einzigen Figurendarstellung zusammen mit einem erfindungsgemäßen Verfahrensablauf schematisch dargestellt.

Die einzige Figurendarstellung zeigt somit in schematischer Darstellung die erfindungsgemäße Vorrichtung zur Behandlung von Schwefeloxide enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide oder zu Zwecken der Reduktion des Schwefeloxidgehalts, insbesondere eine Vorrichtung zur Durchführung des zuvor beschriebenen erfindungsgemäßen Verfahrens, wobei die Vorrichtung umfaßt:

- einen Reaktor 1 zur Umsetzung der aus den zu behandelnden Abgasen stammenden Schwefeloxiden zu Natriumsulfat durch Eindüsung von pulverförmigen Natriumhydrogencarboat (= "Alkalisulfatreaktor");

- stromabwärts zu dem Reaktor 1 einen Reaktor 2 zur Umsetzung des in dem stromaufwärts zu Reaktor 2 angeordneten Reaktor 1 erhaltenen Natriumsulfats zu Calciumsulfat in Form von Gips und Natriumchlorid (= "Calciumsulfatreaktor");

- stromabwärts zu dem Reaktor 2 einen Reaktor 3 zur Umsetzung des in dem stromaufwärts zu Reaktor 3 angeordneten Reaktor 2 erhaltenen Natriumchlorids zu Natriumhydrogencarbonat und Ammoniumchlorid, wobei der Reaktor 3 eine Einrichtung 5 zur Rückführung des erhaltenen Natriumhydrogencarbonats zu dem Reaktor 1 sowie Einrichtungen zum Einleiten von Kohlendioxid einerseits und Ammoniak andererseits umfasst (= "Alkali(hydrogen)carbonatreaktor");

- stromabwärts zu dem Reaktor 3 einen Reaktor 4 zur Umsetzung des in dem stromaufwärts zu Reaktor 4 angeordneten Reaktor 3 erhaltenen Ammoniumchlorids zu Ammoniak und Calciumchlorid, wobei der Reaktor 4 eine Einrichtung 6 zur Rückführung des erhaltenen Ammoniaks in den Reaktor 3 und eine Einrichtung 7 zur Rückführung des erhaltenen Calciumchlorids in den Reaktor 2 umfaßt.

Gemäß einer bevorzugten Ausführungsform der erfindungsgemäßen Vorrichtung ist der Reaktor 1 separat von den übrigen Reaktoren 2, 3 und gegebenenfalls 4 betreibbar.

Dabei kann es erfindungsgemäß insbesondere vorgesehen sein, daß der Reaktor 1 als von den übrigen Reaktoren 2, 3 und gegebenenfalls 4 entkoppelte und/oder hierzu dezentrale Anlage betreibbar ist. Die Umsetzung der zu behandelnden Abgase in Reaktor 1 mit Natriumhydrogencarbonat kann somit räumlich von den anderen Teilen der Vorrichtung und Verfahrensschritten getrennt sein.

Für weitergehende Einzelheiten für die erfindungsgemäße Vorrichtung kann auf die obigen Ausführungen zu dem erfindungsgemäßen Verfahren verwiesen werden, welche in bezug auf die erfindungsgemäße Vorrichtung entsprechend gelten.

Das erfindungsgemäße Verfahren, einschließlich der erfindungsgemäßen Vorrichtung zu seiner Durchführung, besitzt eine Reihe von Vorteilen, welche es gegenüber dem Stand der Technik auszeichnen:

Das erfindungsgemäße Verfahren ist wesentlich ökonomische und kostengünstiger als die bislang bekannten Verfahren des Standes der Technik. Es verbindet die Effizienz einer Trockensorption von Schwefeloxid durch Alkalihydrogencarbonate bzw. -carbonate mit den Kostenvorteilen einer kalkbasierten Abscheidung. Zur Durchführung des Verfahrens müssen - sofern überhaupt - lediglich Brandkalk und gegebenenfalls Kohlendioxid, wenn dieses nicht aus den Rauchgasen gewonnen wird, erworben werden. Die Abscheidungsrate der Schwefeloxide liegt im erfindungsgemäßen Verfahren bei 100 %, während kalkbasierte Entschwefelungsverfahren nur Abscheideraten von etwa 10 % besitzen.

Das umweltgefährdende Ammoniak wird in einem Kreislaufprozeß gefahren und gelangt so nicht in die Umwelt bzw. muß nicht kostenträchtig entsorgt werden. Die chloridhaltigen Verbindungen werden ebenfalls im Kreislaufprozeß gefahren und belasten somit ebenfalls nicht das Abwasser bzw. die Umwelt.

Auch das zur Abscheidung von Schwefeloxiden benötigte Hydrogencarbonat wird in einem Pseudokreisprozeß verwendet. Es wird einerseits bei der Abscheidung bzw. Entfernung verbraucht, andererseits wird im Laufe des Verfahrens dieselbe Menge an Hydrogencarbonat wiedergewonnen, so daß kein Nettoverbrauch dieser teuren Substanzen vorhanden ist. Als einziges "Abfallprodukt" entsteht Gips, welcher wiederum einen Rohstoff darstellt und als Baustoff verkauft werden kann.

Im gesamten Verfahren entstehen keine Abwässer, welche kostenträchtig aufbereitet bzw. entsorgt werden müssen.

Es werden keine gefährlichen und/oder schwierig zu handhabenden Substanzen erzeugt bzw. im erfindungsgemäßen Verfahren eingesetzt.

## Patentansprüche

1. Verfahren zur Behandlung von Schwefeloxide enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide oder zu Zwecken der Reduktion des Schwefeloxidgehalts, **gekennzeichnet durch** die folgenden Verfahrensschritte:

    (a) Umsetzung der aus den zu behandelnden Abgasen stammenden Schwefeloxide mit Natriumhydrogencarbonat unter oxidierenden Bedingungen und/oder in Gegenwart von Sauerstoff zur Erzeugung von Natriumsulfat, wobei pulverförmiges Natriumhydrogencarbonat in feiner Verteilung bei Temperaturen im Bereich von 100 bis 300 °C in den Strom der die Schwefeloxide enthaltenden Abgase eingedüst und/oder eingesprüht wird; dann
    (b) Umsetzung des in Verfahrensschritt (a) erhaltenen Natriumsulfats mit Calciumchlorid zur Erzeugung von Calciumsulfat und Natriumchlorid, wobei das in Verfahrensschritt (a) erhaltene feste Natriumsulfat in eine wäßrige Lösung oder Dispersion überführt wird, welche dann mit einer wäßrigen Lösung oder Dispersion von Calciumchlorid in Kontakt gebracht wird, und das in Verfahrensschritt (b) erhaltene Calciumsulfat abgetrennt und aus dem Verfahren ausgeschleust wird; nachfolgend
    (c) Umsetzung des in Verfahrensschritt (b) erhaltenen Natriumchlorids in Form einer wäßrigen Lösung oder Dispersion zu Natriumhydrogencarbonat unter Zusatz von und/oder Inkontaktbringen mit gasförmigem Kohlendioxid und Ammoniak unter Bildung von Ammoniumchlorid als weiterem Reaktionsprodukt, gefolgt von einer Rückführung des resultierenden Natriumhydrogencarbonats in Verfahrensschritt (a); dann
    (d) Umsetzung des in Verfahrensschritt (c) erhaltenen Ammoniumchlorids zu Ammoniak und Calciumchlorid, gefolgt von einer Rückführung des resultierenden Ammoniaks in Verfahrensschritt (c) und einer Rückführung des resultierenden Calciumchlorids in Verfahrensschritt (b), wobei eine wäßrige Lösung oder Dispersion des Ammoniumchlorids unter Zusatz von und/oder Inkontaktbringen mit Calciumhydroxid umgesetzt wird.

2. Verfahren nach einem der vorangehenden Ansprüche, **dadurch gekennzeichnet, daß** Verfahrensschritt (b) bei Temperaturen von 10 bis 90°C, insbesondere 15 bis 60 °C, bevorzugt 20 bis 40°C, durchgeführt wird.

3. Verfahren nach einem der vorangehenden Ansprüche, **dadurch gekennzeichnet, daß** der Ammoniak in gasförmiger Form eingesetzt wird.

4. Verfahren nach einem der vorangehenden Ansprüche, **dadurch gekennzeichnet, daß** das in Verfahrensschritt (c) eingesetzte Kohlendioxid aus den zu behandelnden Abgasen stammt, insbesondere nach Aufkonzentrierung des Kohlendioxidgehalts in den zu behandelnden Abgasen, bevorzugt auf mindestens 50 Vol.-%, insbesondere mindestens 80 Vol.-%, bezogen auf die Abgase.

5. Verfahren nach einem der vorangehenden Ansprüche, **dadurch gekennzeichnet, daß** Verfahrensschritt (c) bei Temperaturen von höchstens 60°C, insbesondere im Bereich von 10 bis 60 °C, insbesondere 20 bis 60°C, durchgeführt wird.

6. Verfahren nach einem der vorangehenden Ansprüche, **dadurch gekennzeichnet, daß** Verfahrensschritt (d) bei Temperaturen von 20 bis 100 °C, insbesondere 50 bis 95 °C, bevorzugt 80 bis 90 °C, durchgeführt wird.

7. Verfahren nach einem der vorangehenden Ansprüche, **dadurch gekennzeichnet, daß** die zu behandelnden Abgase als Schwefeloxide Schwefeldioxid und/oder Schwefeltrioxid enthalten.

8. Verfahren nach einem der vorangehenden Ansprüche, **dadurch gekennzeichnet, daß** die zu behandelnden Abgase neben Schwefeloxiden auch andere saure Gase, insbesondere Halogenwasserstoff, wie Chlorwasserstoff, enthalten, insbesondere wobei die sauren Gase, insbesondere der Halogenwasserstoff, vorzugsweise Chlorwasserstoff, in Verfahrensschritt (a) mit dem Natriumhydrogencarbonat umgesetzt wird.

9. Verfahren nach Anspruch 8, **dadurch gekennzeichnet, daß** die sauren Gase, insbesondere der Halogenwasserstoff, vorzugsweise Chlorwasserstoff, zu Natriumchlorid umgesetzt wird, insbesondere wobei das Natriumchlorid in Verfahrensschritt (c) eingesetzt wird, insbesondere nach Durchlaufen von Verfahrensschritt (b).

10. Verfahren nach Anspruch 8 oder 9, **dadurch gekennzeichnet, daß** als weitere Reaktionsprodukte Kohlendioxid und Wasser entstehen.

11. Verfahren nach einem der vorangehenden Ansprüche, **dadurch gekennzeichnet, daß** das Verfahren mit einem Entstickungsverfahren zu Zwecken der Entfernung und/oder Abscheidung der in den zu behandelnden Abgasen gleichermaßen vorhandenen Stickoxide oder zu Zwecken der Reduktion des Stickoxidgehalts gekoppelt und/oder kombiniert wird, insbesondere wobei das Entstickungsverfahren stromaufwärts oder stromabwärts zu dem Verfahren durchgeführt wird.

12. Vorrichtung zur Behandlung von Schwefeloxide enthaltenden Abgasen, insbesondere Abgasen aus technischen Verbrennungsanlagen, insbesondere Rauchgasen, oder Abgasen aus technischen Prozessen, zu Zwecken der Entfernung und/oder Abscheidung der Schwefeloxide oder zu Zwecken der Reduktion des Schwefeloxidgehalts, **dadurch gekennzeichnet, daß** die Vorrichtung umfaßt:

- einen Reaktor 1 zur Umsetzung der aus den zu behandelnden Abgasen stammenden Schwefeloxiden zu Natriumsulfat durch Eindüsung von pulverförmigem Natriumhydrogencarbonat;
- stromabwärts zu dem Reaktor 1 einen Reaktor 2 zur Umsetzung des in dem stromaufwärts zu Reaktor 2 angeordneten Reaktor 1 erhaltenen Natriumsulfat zu Calciumsulfat in Form von Gips und Natriumchlorid;
- stromabwärts zu dem Reaktor 2 einen Reaktor 3 zur Umsetzung des in dem stromaufwärts zu Reaktor 3 angeordneten Reaktor 2 erhaltenen Natriumchlorids zu Natriumhydrogencarbonat und Ammoniumchlorid, wobei der Reaktor 3 eine Einrichtung (5) zur Rückführung des erhaltenen Natriumhydrogencarbonats zu dem Reaktor 1 sowie Einrichtungen zum Einleiten von Kohlendioxid einerseits und Ammoniak andererseits umfasst;
- stromabwärts zu dem Reaktor 3 einen Reaktor 4 zur Umsetzung des in dem stromaufwärts zu Reaktor 4 angeordneten Reaktor 3 erhaltenen Ammoniumchlorids zu Ammoniak und Calciumchlorid, wobei der Reaktor 4 eine Einrichtung (6) zur Rückführung des erhaltenen Ammoniaks in den Reaktor 3 und eine Einrichtung (7) zur Rückführung des erhaltenen Calciumchlorids in den Reaktor 2 umfaßt.

13. Vorrichtung nach Anspruch 12, **dadurch gekennzeichnet, daß** der Reaktor 1 separat von den übrigen Reaktoren, 2, 3 und gegebenenfalls 4 betreibbar ist, insbesondere als von den übrigen Reaktoren 2, 3 und gegebenenfalls 4 entkoppelte und/oder hierzu dezentrale Anlage.

**Claims**

1. A method for the treatment of exhaust gases containing sulfur oxide, in particular of exhaust gases from technical combustion systems, in particular of waste gases, or exhaust gases from technical processes, for the purpose of removing and/or separating sulfur oxides, or for the purpose of reducing the sulfur oxide content, **characterized by** the following process steps:

(a) the reaction of the sulfur oxides coming from the exhaust gases to be treated, with sodium bicarbonate under oxidizing conditions, and/or in the presence of oxygen for creating sodium sulfate, wherein powder sodium bicarbonate is injected and/or sprayed into the stream of exhaust gases containing the sulfur oxides in a fine distribution at temperatures in the range of 100 to 300°C; then

(b) the reaction of the sodium sulfate obtained in process step (a) with calcium chloride for creating calcium sulfate and sodium chloride, wherein the solid sodium sulfate obtained in process step (a) is transferred to an aqueous solution or dispersion, which is then brought into contact with an aqueous solution or dispersion of calcium chloride, and the calcium sulfate obtained in process step (b) is isolated and separated from the process; subsequently

(c) the reaction of the sodium chloride obtained in process step (b) in the form of an aqueous solution or dispersion into sodium bicarbonate with the addition of, and/or bringing into contact with gaseous carbon dioxide and ammonia under the formation of ammonium chloride as an additional reaction product, followed by the return of the resulting sodium bicarbonate in process step (a); then

(d) the reaction of the ammonium chloride obtained in process step (c) to ammonia and calcium chloride, followed by the return of the resulting ammonia in process step (c), and the return of the resulting calcium chloride in process step (b), wherein an aqueous solution or dispersion of the ammonium chloride is reacted with the addition of, and/or bringing into contact with calcium hydroxide.

2. The method according to one of the previous claims, **characterized in that** process step (b) is carried out at temperatures of 10 to 90°C, in particular 15 to 60°C, preferably 20 to 40°C.

3. The method according to one of the previous claims, **characterized in that** the ammonia is utilized in gaseous form.

4. The method according to one of the previous claims, **characterized in that** the carbon dioxide utilized in process step (c) comes from the exhaust gases to be treated, in particular after the concentration of the carbon dioxide content in the exhaust gases to be treated, preferably to at least 50% by volume, in particular at least 80% by volume, based on the exhaust gases.

5. The method according to one of the previous claims, **characterized in that** the process step (c) is carried out at temperatures of not more than 60°C, in particular in the range of 10 to 60°C, in particular 20 to 60°C.

6. The method according to one of the previous claims, **characterized in that** process step (d) is carried out at temperatures of 20 to 100°C, in particular 50 to 95°C, preferably 80 to 90°C.

7. The method according to one of the previous claims, **characterized in that** the exhaust gases to be treated comprise sulfur dioxide and/or sulfur trioxide as the sulfur oxides.

8. The method according to one of the previous claims, **characterized in that** in addition to the sulfur oxides, the exhaust gases to be treated also comprise other acidic gases, in particular hydrogen halide, such as hydrogen chloride, in particular, wherein the acidic gases, in particular the hydrogen halide, preferably the hydrogen chloride, are reacted with the sodium bicarbonate in process step (a).

9. The method according to claim 8, **characterized in that** the acidic gases, in particular the hydrogen halide, preferably hydrogen chloride, are reacted into sodium chloride, in particular, wherein the sodium chloride is utilized in process step (c), in particular after passing through process step (b).

10. The method according to claims 8 or 9, **characterized in that** carbon dioxide and water are created as additional reaction products.

11. The method according to one of the previous claims, **characterized in that** the method is coupled and/or combined with a denitrification method for the purpose of removing and/or separating the nitrogen oxides equally present in the exhaust gases to be treated, or for the purpose of reducing the nitrogen oxide content, in particular, wherein the denitrification method is carried out upstream or downstream of the method.

12. A device for the treatment of exhaust gases containing sulfur oxide, in particular of exhaust gases from technical combustion systems, in particular of waste gases, or exhaust gases from technical processes, for the purpose of removing and/or separating the sulfur oxides, or for the purpose of reducing the sulfur oxide content, **characterized in that**

the device comprises the following:

- a reactor 1 for reacting the sulfur oxides coming from the exhaust gases to be treated, into sodium sulfate, by means of injecting powder sodium bicarbonate;
- a reactor 2 downstream of reactor 1 for reacting the sodium sulfate contained in the reactor 1 disposed upstream of the reactor 2, into calcium sulfate in the form of gypsum and sodium chloride;
- a reactor 3 downstream of the reactor 2 for reacting the sodium chloride obtained in the reactor 2 disposed upstream of the reactor 3, into sodium bicarbonate and ammonium chloride, wherein the reactor 3 comprises a unit 5 for returning the sodium bicarbonate obtained to the reactor 1, as well as units for introducing carbon dioxide on one hand, and ammonia on the other hand;
- a reactor 4 downstream of the reactor 3 for reacting the ammonium chloride obtained in the reactor 3 disposed upstream of reactor 4, into ammonia and calcium chloride, wherein the reactor 4 comprises a unit 6 for returning the ammonia obtained in reactor 3, as well as units 7 for returning the calcium chloride obtained into the reactor 2.

13. The device according to claim 12, **characterized in that** the reactor 1 may be operated separately from the remaining reactors 2, 3, and optionally 4, in particular as a system optionally being decoupled from the remaining reactors 2, 3, and optionally 4, and/or being local thereto.

**Revendications**

1. Procédé de traitement des gaz d'échappement contenant des oxydes de soufre, en particulier les gaz d'échappement provenant d'installations techniques d'incinération, notamment les gaz de fumée, ou les gaz d'échappement provenant d'autres processus techniques, ayant pour but de d'éliminer et/ou de séparer les oxydes de soufre, ou de réduire la teneur en oxydes de soufre, **caractérisé par** les étapes de procédé suivantes:

   (a) transformation (réaction) des oxydes de soufre provenant des gaz d'échappement à traiter, au moyen de bicarbonate de sodium dans des conditions oxydantes et/ou en présence d'oxygène, en sulfate de sodium, ce en quoi on injecte et/ou on pulvérise du bicarbonate de sodium sous forme de poudre finement divisée et à des températures comprises entre 100 et 300°C dans le flux des gaz d'échappement contenant des oxydes de soufre; puis
   (b) transformation (réaction) du sulfate de sodium obtenu lors de l'étape (a) du procédé, au moyen de chlorure de calcium, en sulfate de calcium et en chlorure de sodium, ce en quoi le sulfate de sodium solide obtenu à l'étape (a) du procédé se trouve transformé en une solution aqueuse ou dispersion, qui se trouve mise en contact avec une solution aqueuse ou dispersion de chlorure de calcium, et le sulfate de calcium obtenu à l'étape (b) du procédé séparé et éjecté du procédé; ensuite
   (c) transformation (réaction) du chlorure de sodium obtenu à l'étape (b) du procédé sous forme de solution aqueuse ou dispersion en bicarbonate de sodium par l'ajout de et/ou la mise en contact avec du dioxyde de carbone et de l'ammoniaque gazeux, ce en quoi du chlorure d'ammonium se trouve produit en tant que produit de réaction supplémentaire, puis réintroduction du bicarbonate de sodium dans l'étape (a) du procédé; puis
   (d) transformation (réaction) du chlorure d'ammonium obtenu à l'étape (c) du procédé en ammoniaque et chlorure de calcium, suivie d'une réintroduction de l'ammoniaque en résultant dans l'étape (c) du procédé et une réintroduction du chlorure de calcium résultant dans l'étape (b) du procédé, ce en quoi une solution aqueuse ou dispersion du chlorure d'ammonium se trouve transformée sous l'effet de l'adjonction de et/ou la mise en contact avec de l'hydroxyde de calcium.

2. Procédé selon l'une des revendications précédentes, **caractérisé par le fait que** l'étape (b) du procédé est réalisée à des températures comprises entre 10 et 90°C, en particulier entre 15 et 60°C, et de préférence entre 20 et 40°C.

3. Procédé selon l'une des revendications précédentes, **caractérisé par le fait que** l'ammoniaque est utilisée sous forme gazeuse.

4. Procédé selon l'une des revendications précédentes, **caractérisé par le fait que** le dioxyde de carbone utilisé dans l'étape (c) du procédé provient des gaz d'échappement à traiter, en particulier après reconcentration du taux de dioxyde de carbone dans les gaz d'échappement à traiter, de préférence avec une concentration d'au moins 50 % du volume, et en particulier avec une concentration d'au moins 80% du volume.

5. Procédé selon l'une des revendications précédentes, **caractérisé par le fait que** l'étape (c) du procédé est réalisée à des températures de 60°C maximum, en particulier entre 10 et 60°C, et en particulier entre 20 et 60°C.

6. Procédé selon l'une des revendications précédentes, **caractérisé par le fait que** l'étape (d) du procédé est réalisée à des températures comprises entre 20 et 100°C, en particulier entre 50 et 95°C, de préférence entre 80 et 90°C.

7. Procédé selon l'une des revendications précédentes, **caractérisé par le fait que** les gaz d'échappement à traiter contiennent, en tant qu'oxydes de soufre, du dioxyde de soufre et/ou du trioxyde de soufre.

8. Procédé selon l'une des revendications précédentes, **caractérisé par le fait que** les gaz d'échappement à traiter contiennent en particulier, outre des oxydes de soufre et autres gaz acides, des acides halogénohydriques tels que de l'acide chlorhydrique, et où l'on observe en particulier que les gaz acides, en particulier l'acide halogénohydrique, de préférence l'acide chlorhydrique, réagissent chimiquement avec le bicarbonate de sodium à l'étape (a) du procédé.

9. Procédé selon la revendication 8, **caractérisé par le fait que** les gaz acides, en particulier l'acide halogénohydrique, de préférence l'acide chlorhydrique, sont transformés en chlorure de sodium, et où l'on observe en particulier que le chlorure de sodium est utilisé à l'étape (c) du procédé, en particulier après avoir réalisé l'étape (b) du procédé.

10. Procédé selon la revendication 8 ou 9, **caractérisé par le fait que** l'on voit apparaître du dioxyde de carbone et de l'eau en tant que produits supplémentaires de la réaction.

11. Procédé selon l'une des revendications précédentes, **caractérisé par le fait que** le procédé est associé et/ou combiné à un procédé de dénitruration dans le but d'éliminer et/ou de séparer les oxydes nitriques également contenus dans les gaz d'échappement à traiter, ou dans le but de réduire la teneur en oxyde nitrique, en particulier ce en quoi le procédé de dénitruration est réalisée en amont ou en aval du procédé.

12. Dispositif destiné à traiter les oxydes de soufre contenus dans les gaz d'échappement, en particulier les gaz d'échappement provenant d'installations techniques d'incinération, en particulier les gaz de fumées, ou les gaz d'échappement provenant de procédés techniques, dans le but d'enlever et/ou d'éliminer les oxydes de soufre ou dans le but de réduire le taux d'oxyde de soufre,
**caractérisé par le fait**
**que** le dispositif comprend :

   - un réacteur 1, dans le but de transformer (réagir) les oxydes de soufre provenant des gaz d'échappement à traiter, en sulfate de sodium, et ceci en injectant du bicarbonate de sodium sous forme de poudre;
   - en aval du réacteur 1 un réacteur 2, dans le but de transformer (réagir) le sulfate de sodium contenu dans le réacteur 1 situé en amont du réacteur 2, en sulfate de calcium sous forme de gypse et chlorure de sodium;
   - en aval du réacteur 2 un réacteur 3, dans le but de transformer (réagir) le chlorure de sodium contenu dans le réacteur 2 situé en amont du réacteur 3, en bicarbonate de sodium et chlorure d'ammonium, le réacteur 3 comprenant un équipement 5 permettant de reconduire le bicarbonate de sodium obtenu vers le réacteur 1, ainsi que des équipements permettant d'introduire du dioxyde de carbone d'une part et de l'ammoniaque d'autre part;
   - en aval du réacteur 3 un réacteur 4, dans le but de transformer (réagir) le chlorure d'ammonium contenu dans le réacteur 3 situé en amont du réacteur 4, en ammoniaque et chlorure de calcium, le réacteur 4 comprenant un équipement 6 permettant de reconduire l'ammoniaque obtenu vers le réacteur 3 et un équipement 7 permettant de reconduire le chlorure de calcium obtenu vers le réacteur 2.

13. Un équipement selon la revendication 12, **caractérisé par le fait que** le réacteur 1 peut être exploité séparément des autres réacteurs 2 et 3, et le cas échéant 4, en particulier en tant qu'installation découplée des autres réacteurs 2, 3 et le cas échéant 4, et/ou décentralisée par rapport à ces derniers.

Gips ($Ca_2SO_4 \cdot 2H_2O$)

CaCl$_2$

**7**

| | | | |
|---|---|---|---|
| Rauchgase mit $SO_2$,$CO_2$, ggf. HCl... | **1** Schritt (a)= Reaktion (1); ggf. auch Reaktion (5) | **2** Schritt (b)= Reaktion (2) | **3** Schritt (c)= Reaktion (3) |

$Na_2SO_4$ und ggf. NaCl

NaCl

$NH_4Cl$

**4** Schritt (d)= Reaktion (4)

NaHCO$_3$

**5**

NH$_3$

**6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0366182 A1

- EP 0005301 A1